# EUROPEAN PATENT APPLICATION

(11) **EP 4 450 855 A1**
(43) Date of publication of application: **23.10.2024**
(21) Application number: 22906254.2
(22) Date of filing: 29.11.2022
(51) Int. Cl.: F16K 27/02, F16K 1/02

(54) **STOP VALVE AND REFRIGERATION SYSTEM HAVING SAME**

(30) Priority: 18.12.2021 CN 202123218681 U
(71) Applicant: Zhejiang Dunan Artificial Environment Co., Ltd., Shaoxing Zhejiang 311835 (CN)
(72) Inventor: LOU, Feng, Shaoxing, Zhejiang 311835 (CN); FENG, Guanghua, Shaoxing, Zhejiang 311835 (CN); ZHOU, Feng, Shaoxing, Zhejiang 311835 (CN); SHOU, Jie, Shaoxing, Zhejiang 311835 (CN)
(74) Representative: Petraz, Gilberto Luigi
(86) International application number: PCT/CN2022/135061
(87) International publication number: WO 2023/109504

(57) **Abstract**

A stop valve is provided. The stop valve includes a hollow valve body (10) and a valve core (20). A valve seat (17) is disposed in the valve body (10), and a valve port (171) is disposed on the valve seat (17). At least a portion of the valve core (20) is disposed inside the valve body (10) and can move along an axis of the valve body (10) to block or open the valve port (171). The valve core (20) includes a connecting portion (22) and a guiding portion (23) connected with each other, the guiding portion (23) is disposed at an end of the connecting portion (22) proximal to the valve port (171) and can extend into the valve port (171), an end of the connecting portion (22) proximal to the guiding portion (10) is provided with a third sealing member (233), the third sealing member (233) can abut against the valve seat (17), and at least a part of the guiding portion (10) is pressed against the third sealing member (233).

## Description

### CROSS-REFERENCE TO RELATED APPLICATION

This application claims priority to Chinese patent application No. 202123218681.3, filed on December 18, 2021, and titled "STOP VALVE AND REFRIGERATION SYSTEM HAVING SAME", the content of which is hereby incorporated by reference in its entirety.

### TECHNICAL FIELD

The present invention relates to the field of refrigeration technology, in particular, to a stop valve and a refrigeration system having same.

### BACKGROUND

In a refrigeration system, a stop valve plays an important role in cutting off and throttling a medium in the pipeline at which the stop valves are located. An open-close member of the stop valve is a valve core, which is mainly configured to cut off the medium in a low temperature environment.

In a conventional stop valve, a line hard seal is usually implemented between the valve core and a valve seat by mutual extrusion. To implement the first-line hard sealing, the valve core and the valve seat need to be made of a soft material. Otherwise, it is easy to lead to a problem of poor sealing and leakage, and application of the conventional stop valve is limited.

### SUMMARY

A stop valve is provided in the present invention. A technical solution is as follows.

A stop valve includes a hollow valve body and a valve core. A valve seat is disposed in the valve body, and a valve port is disposed on the valve seat. At least a portion of the valve core is disposed inside the valve body and capable of moving along an axis of the valve body to block or open the valve port. The valve core includes a connecting portion and a guiding portion connected with each other, the guiding portion is disposed at an end of the connecting portion proximal to the valve port and capable of extending into the valve port, an end of the connecting portion proximal to the guiding portion is provided with a third sealing member, the third sealing member is capable of abutting against the valve seat, and at least a part of the guiding portion is pressed against the third sealing member.

In this way, the guiding portion may limit the third sealing member in the connecting portion, so as to avoid a problem that the third sealing member is easy to fall off.

In an embodiment, a percentage of an area of the guiding portion pressed on the third sealing member is in a range of 15% to 50% of an area of a side surface of the third sealing member towards the valve port.

In this way, it may be ensured that a position limiting function of the guiding portion to the third sealing member, and the third sealing member may be prevented from falling off. In addition, a material of the guiding portion may be saved, and sufficient space may be reserved for the third sealing member so that the third sealing member may abut against the valve seat.

In an embodiment, the percentage of the area of the guiding portion pressed on the third sealing member is in a range of 30% to 40% of the area of the side surface of the third sealing member towards the valve port.

In an embodiment, the guiding portion and the connecting portion are disposed separately.

In this way, the guiding portion may be assembled after the third sealing member is mounted, so that the guiding portion may be pressed against the third sealing member. In addition, when the guiding portion and the connecting portion are disposed separately, the connection portion and the guiding portion may be cut respectively to reduce a cutting amount and improve processing efficiency.

In an embodiment, a side of the connecting portion towards the guiding portion is provided with a second groove. The guiding portion includes a first section and a protrusion, the first section is disposed at an end of the protrusion towards the connecting portion, the first section is inserted into the second groove and connected to an inner wall of the second groove, the protrusion is connected to a side of the first section away from the connecting portion, and the protrusion is capable of extending into the valve port.

In an embodiment, a side of the guiding portion towards the connecting portion is provided with a second groove, and an end of the connecting portion is inserted into the second groove and connected to an inner wall of the second groove.

In an embodiment, the side of the connecting portion towards the guiding portion is provided with the second groove and the guiding portion is connected to the inner wall of the second groove by bolt or thread.

In an embodiment, the side of the guiding portion towards the connecting portion is provided with the second groove and the connecting portion is connected to the inner wall of the second groove by bolt or thread.

In this way, a bolt connecting or a thread connecting may ensure strength of connection between the guiding portion and the second groove, and the guiding portion may be removed from the second groove, thereby facilitating removal and mounting of the third sealing member.

In an embodiment, when the third sealing member abuts against an end surface of the valve seat towards the connecting portion, a depth of the guiding portion extending into the valve port is at least 1 mm.

In this way, it may be ensured that a cooperation strength and sealing performance between the guiding portion and the valve port, and it may be avoided that the valve core is not sealed up severely due to too shallow insertion of the guiding portion.

In an embodiment, an inner diameter of the valve port is disposed corresponding to an outer diameter of the guiding portion and an outer sidewall of the guiding portion abuts against an inner wall of the valve port.

In this way, the guiding portion may guide the valve core to be inserted into the valve port to avoid bias. It may enhance the sealing that the guiding portion abuts against the inner wall of the valve port.

In an embodiment, a material of the third sealing member comprises copper or plastic.

In this way, copper or plastic may provide certain softness while ensuring strength, thus enhancing sealing performance.

The present invention further provides a refrigeration system, which includes the foregoing stop valve.

Details of one or more embodiments of the present invention are set forth in the accompanying drawings and description below. Other features, objects, and advantages of the present invention will become apparent from the description, the accompanying drawings, and the claims.

### BRIEF DESCRIPTION OF THE DRAWINGS

Reference may be made to one or more of the accompanying drawings in order to better describe and illustrate those embodiments and/or examples of the invention disclosed herein. The additional details or examples used to describe the accompanying drawings should not be considered a limitation on the scope of any of the disclosed inventions, the embodiments and/or examples presently described, and the best mode of these inventions as presently understood.
FIG. 1 is a sectional diagram of a stop valve in an embodiment of the present invention.
FIG. 2 is a sectional diagram of a stop valve in an embodiment of the present invention.
FIG. 3 is a front diagram of a valve core of a stop valve in an embodiment of the present invention.
FIG. 4 is a sectional diagram of a valve core of a stop valve in an embodiment of the present invention.
FIG. 5 is a perspective diagram of a stop valve in the present invention.
FIG. 6 is a front diagram of a stop valve in the present invention.
FIG. 7 is a top diagram of a stop valve in the present invention.
FIG. 8 is a left diagram of a stop valve in the present invention.

The meanings of the symbols in the figures are as follows: 100 represents a stop valve, 10 represents a valve body, 11 represents a first opening, 111 represents an annular protrusion, 12 represents a second opening, 13 represents a first communicating pipe, 14 represents a second communicating pipe, 15 represents an end cover, 151 represents a second thread section, 16 represents a main body, 17 represents a valve seat, 171 represents a valve port, 20 represents a valve core, 21 represents an operating portion; 211 represents a first thread section, 22 represents a connecting portion, 221 represents a first groove, 222 represents a second groove, 23 represents a guiding portion, 231 represents a first section, 232 represents a protrusion, 233 represents a third sealing member, 25 represents a first sealing member, 26 represents a second sealing member, 30 represents a spiracle assembly, 31 represents a cover, 32 represents a fourth sealing member, 33 represents a connecting body, 34 represents an elastic member, and 35 represents a spiracle core.

### DETAILED DESCRIPTION

The technical solutions in the embodiments of the present invention will be described clearly and completely in the following in conjunction with the accompanying drawings in the embodiments of the present invention, and it is obvious that the described embodiments are only a part of the embodiments of the present invention, but not all of the embodiments. Based on the embodiments in the present invention, all other embodiments obtained by one skilled in the art without making creative labor fall within the scope of protection of the present invention.

It should be noted that when an assembly is considered to be "disposed on" another assembly, it can be directly disposed to another assembly, or there can be a centered assembly. When an assembly is considered to be "set on" another assembly, it can be directly set on another assembly, or there can be a centered assembly at the same time. When an assembly is considered to be "fixed to" another assembly, it can be directly fixed to another assembly, or there can be a centered assembly at the same time.

Unless defined otherwise, technical terms or scientific terms involved in the present invention have the same meanings as would generally understood by one skilled in the technical field of the present invention. The terms used in the description of the present invention are merely intended to describe specific embodiments, and are not intended to limit the present invention. The term "and/or" as used herein includes any and all combinations of one or more associated listed items.

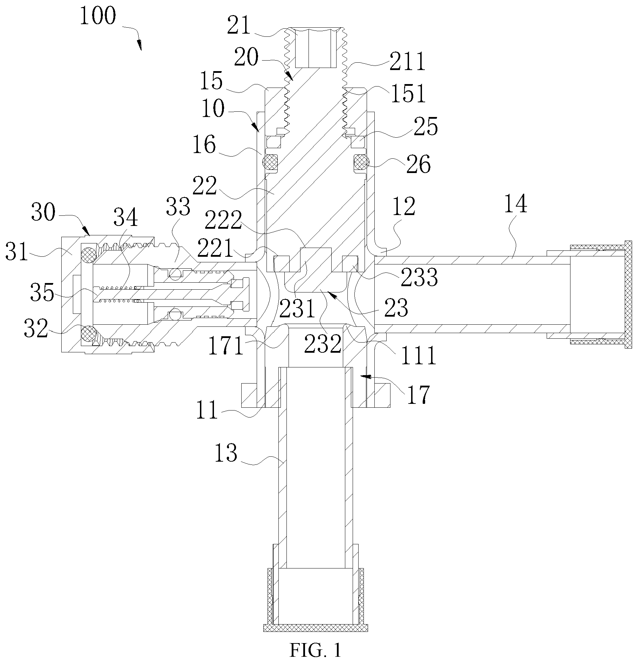

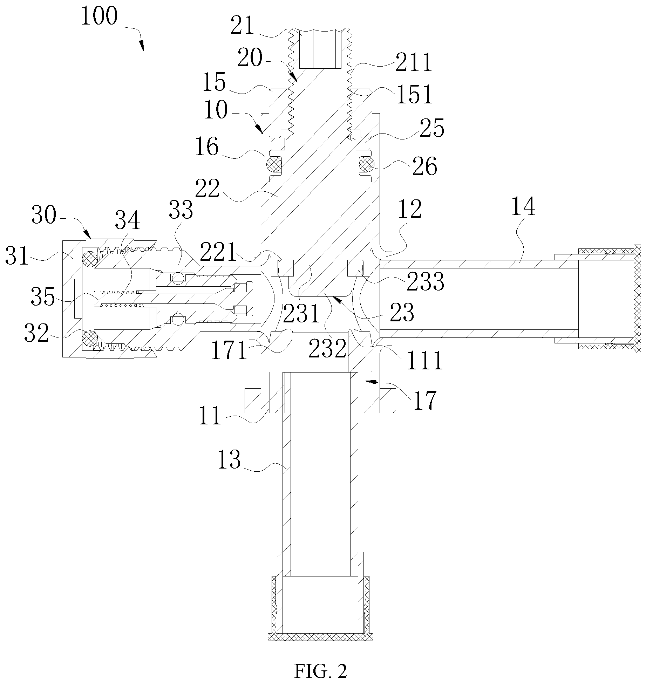

Referring to FIG. 1 and FIG. 2, a stop valve 100 is mounted in a refrigeration system and configured to cut off or communicate a passage.

The stop valve 100 includes a valve body 10 and a valve core 20 connected with each other. An interior of the valve body 10 is hollow and configured to accommodate members such as the valve core 20. At least a portion of the valve core 20 is disposed inside the valve body 10 and capable of moving along an axis of the valve body 10.

The valve body 10 may be provided with a first opening 11 and a second opening 12. In the present embodiment, when the stop valve 100 is mounted vertically as referring to the figures (when orientation items such as up, low, left, and right are involved, the stop valve 100 may be mounted vertically by default, and details are not described in the following), the first opening 11 and the second opening 12 may be disposed on a low side and a right side of the valve body 10, respectively. A side of the first opening 11 away from the valve body 10 may be connected to a first communicating pipe 13, the first opening 11 may be connected to the outside by the first communicating pipe 13. A side of the second opening 12 away from the valve body 10 may be connected to a second communicating pipe 14, and the second opening 12 may be connected to the outside by the second communicating pipe 14. The first communicating pipe 13 and the second communicating pipe 14 may be used as an inlet and an outlet for medium, respectively. When the first communicating pipe 13 is used as the inlet for the medium, the medium may enter the stop valve 100 from the first communicating pipe 13, and enter the interior of the valve body 10 by the first opening 11. When the stop valve 100 is in an open state, the medium may flow out from the stop valve 100 by the second opening 12 and the second communicating pipe 14. Vice versa, the medium may enter the valve body 10 from the second communicating pipe 14 by the second opening 12, and then flow out from the stop valve 100 by the first opening 11 and the first communicating pipe 13.

Alternatively, locations of the first opening 11 and the second opening 12 may not be limited to the low side and the right side of the valve body 10 in the present embodiment. In other embodiments, the first opening 11 and the second opening 12 may also be disposed on left and right sides of the valve body 10, the upper and lower sides of the valve body 10, and the like, respectively, as long as communication or cut-off between two openings is implemented by axial movement of the valve core 20.

The valve body may further include a main body 16, an end cover 15, and a valve seat 17. In an embodiment of the present invention, the main body 16 may be located at a side of the valve body 10 away from the first opening 11, disposed opposite to the first opening 11, and coaxial with the first opening 11. The main body 16 may be configured to limit the valve core 20, so that the valve core 20 may move axially along the main body 16, thereby implementing a transition between an open state and a closed state of the stop valve 100. The end cover 15 may be located at a top end of the main body 16, and cooperate with the valve core 20 to seal the valve body 10, thereby preventing impurities such as external dust and powder from entering the valve body 10, preventing affecting sealing property of the stop valve 100 and purity of the medium entering the valve body 10, and preventing affecting implementation of other related functions of the stop valve 100. The valve seat 17 may be disposed in the main body 16, and configured to abut against the valve core 20, so as to implement communication or isolation inside the valve body 10. In the present embodiment, the valve seat 17 may be disposed at the first opening 11. In other embodiments, the valve seat 17 may further be disposed between the first opening 11 and the second opening 12.

Alternatively, the end cover 15 may also disposed inside the main body 16, i.e., an outer circumferential side of the end cover 15 may abut against an inner circumferential side of the main body 16, and an inner circumferential side of the end cover 15 may abut against an outer circumferential side of the valve core 20. In this way, the end cover 15 and the valve core 20 may cooperate with each other to seal the valve body 10. A location of the end cover 15 may not be limited to a solution in the present embodiment as long as the foregoing functions can be implemented.

The valve seat 17 may be provided with a valve port 171, and the valve port 171 may be in communication with the first opening 11, so as to jointly form a passage through which the medium flows in or flows out. In some embodiments, the valve seat 17 may be disposed separately from the valve body 10 to reduce processing difficulty. Alternatively, in other embodiments, the valve seat 17 may also be directly formed by the valve body 10.

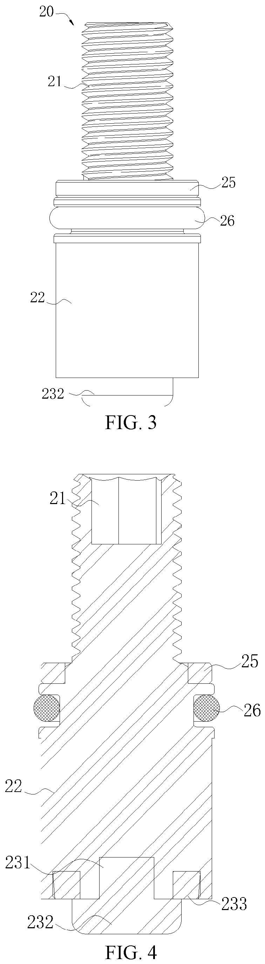

Referring to FIG. 3 and FIG. 4, the valve core 20 may include an operating portion 21, a connecting portion 22, and a guiding portion 23. An end of the operating portion 21 may be connected to the connecting portion 22, and the other end of the operating portion 21 may extend out from the end cover 15. The connecting portion 22 may be located between the operating portion 21 and the guiding portion 23, and configured to be connected to the operating portion 21 and the guiding portion 23. The guiding portion 23 may be connected to an end of the connecting portion 22 away from the operating portion 21, and move axially with the operating portion 21 and the connecting portion 22. The connecting portion 22 and the guiding portion 23 may be separately disposed to process respectively, so as to reduce processing time and cutting amount, and reduce costs.

The operating portion 21 may extend out from an upper end surface of the end cover 15 for easy processing and removal. The operating portion 21 may be configured as a hollow structure with an upper-end opening, and a plurality of planes may be evenly distributed at interval on an inner surface of the operating portion 21, so as to adapt to tools such as an inner hex wrench. In other embodiments, the plurality of planes on the inner surface of the operating portion 21 may also not be evenly distributed at interval, so as to adapt to an irregularly shaped wrench.

The connecting portion 22 may be located between the operating portion 21 and the guiding portion 23, be driven by the operating portion 21, and rotate with the operating portion 21 synchronously. An outer circumferential side of the operating portion 21 may have a first thread section 211, and an inner surface of the valve body 10 may be provided with a second thread section 151 that matches the first thread section 211. In an operating process, the operating portion 21 may be operated and rotated by an external machine or tool, so as to drive the first thread section 211 to rotate circumferentially. The first thread section 211 may cooperate with the second thread section 151, so that the operating portion 21 may perform axial lifting movement. The operation portion 21 may drive the connecting portion 22 connected to the operating portion 21, and the connecting portion 22 may drive the guiding portion 23 connected to the connecting portion 22, so as to finally implement axial movement of the valve core 20.

In some embodiments, the second thread section 151 may also be disposed on an inner surface of the end cover 15. The second thread section 151 on an inner circumferential side of the end cover 15 may cooperate with the first thread section 211 on the outer circumferential side of the operating portion 21 to move the connecting portion 22 axially.

The connecting portion 22 may be connected to an end of the operating portion 21 towards the valve port 171, and an outer sidewall of the connecting portion 22 may abut against an inner wall of the main body 16, so that the valve core 20 may be moved axially along the inner wall of the main body 16. A diameter of the connecting portion 22 may be greater than a diameter of the operating portion 21, so that a step may be formed between the connecting portion 22 and the operating portion 21. A first sealing member 25 may be disposed on the step, and the first sealing member 25 may abut against a side of the end cover 15 proximal to the connecting portion 22. When the valve core 20 moves to an extreme position along a direction towards the end cover 15, i.e., the first sealing member 25 abuts against the end cover 15, the first sealing member 25 may serve as a buffer and enhance sealing between the first sealing member 25 and the end cover 15.

An end of the connecting portion 22 proximal to the operating portion 21 may further be provided with a second sealing member 26. The second sealing member 26 may circumferentially surround an outer circumferential side of the connecting portion 22, and an outer circumferential side of the second sealing member 26 may abut against the inner wall of the main body 16 circumferentially, so as to seal the valve body 10, so that the medium does not leak out in a flow process of the medium between the first opening 11 and the second opening 12. In other embodiments, the second sealing member 26 may also be replaced with a member that can also play a sealing function such as a sealing gasket.

An end of the connecting portion 22 proximal to the valve port 171 may be provided with a first groove 221 and a second groove 222. The second groove 22 may be located at the end of the connecting portion 22 proximal to the valve port 171, and configured to be connected to the guiding portion 23. The first groove 221 may be located at an end surface where a notch of the second groove 222 towards the valve port 171 is located, and a third sealing member 233 may be inserted around the first groove 221.

In some embodiments, the second groove 222 may be a cylindrical groove, and the second groove 222 may be coaxial with the connecting portion 22 and the guiding portion 23. Alternatively, in other embodiments, the second groove 222 may be disposed in another shape, such as a cube shape, as long as the second groove 222 can be cooperatively connected to the guiding portion 23.

In some embodiments, the first groove 221 may be a circular groove and disposed around the second groove 222. A shape and a depth of the first groove 221 may be adjusted according to a shape and a size of the third sealing member 233. In other words, after the third sealing member 233 is inserted into the first groove 221, it should be ensured that the third sealing member 233 can abut against the valve seat 17 and seal the valve port 171 in the closed state of the stop valve 100.

The guiding portion 23 may be located at an end of the connecting portion 22 proximal to the first opening 11, and configured to guide the valve core 20 to be inserted into the valve port 171, so as to implement sealing fit between the valve core 20 and the valve port 171.

The guiding portion 23 may include a first section 231 and a protrusion 232. The first section 231 may be located at a side of the guiding portion 23 proximal to the connecting portion 22, and configured to allow the guiding portion 23 and the connecting portion 22 to be fixedly connected. The protrusion 232 may be located at a side of the guiding portion 23 towards the valve port 171, and configured to guide the valve core 20 to be inserted into the valve port 171.

Referring to FIG. 1, in an embodiment of the present invention, the first section 231 and the protrusion 232 may be disposed separately. In this way, the guiding portion 23 may be assembled after the third sealing member 233 is mounted, so that the guiding portion 23 may be pressed against the third sealing member 233. In addition, when the first section 231 and the protrusion 232 are disposed separately, the connection portion 22 and the guiding portion 23 may be cut respectively to reduce a cutting amount and improve processing efficiency.

Referring to FIG. 2, in an embodiment, the first section 231 and the protrusion 232 may be integrally formed, so as to improve stability of the valve core 20.

Specifically, the first section 231 may be inserted into the second groove 222, connected to an inner wall of the second groove 222 by bolt or thread. A connecting manner between the first section 231 and the second groove 222 may not be limited to the connecting shown in the present embodiment, as long as a fixed connection between the guiding portion 23 and the connecting portion 22 can be implemented.

Alternatively, in other embodiments, the guiding portion 23 may further be provided with a second groove 222, and an end of the connecting portion 22 may be inserted into the second groove 222 and connected to the inner wall of the second groove 222. A connection manner in this embodiment may be similar to the foregoing connection manner, and details may not be described herein again.

The protrusion 232 may be pressed against the third sealing member 233, so that after the third sealing member 233 is inserted into the first groove 221, in addition to being limited circumferentially by the first groove 221, a side of the third sealing member 233 towards the valve port 171 may further be limited by the protrusion 232, i.e., four directions of the third sealing member 233 may be effectively limited, and the sealing member 232 may not be easy to fall off from the first groove 221, thereby implementing hard sealing of the valve core 20.

Specifically, a percentage of an area of the protrusion 232 pressed on the third sealing member 233 may be in a range of 15% to 50% of an area of a side surface of the third sealing member 233 towards the valve port 171. A pressing strength of the protrusion 232 may be strengthened, and the third sealing member 233 may abut against the valve seat 17.

In some embodiments, the percentage of the area of the protrusion 232 pressed on the third sealing member 233 may be in a range of 30% to 40% of the area of the side surface of the third sealing member 233 towards the valve port 171.

Specifically, an outer diameter of the protrusion 232 may be disposed corresponding to an inner diameter of the valve port 171. When the stop valve is in the close state, the protrusion may extend into the valve port 171, thereby guiding the axial movement of the valve core 20. The protrusion 232 may be limited circumferentially by the valve port 171, thereby improving stability of the stop valve 100 in the closed state.

Furthermore, a sidewall of the protrusion 232 may be connected to a bottom wall of the protrusion 232 towards the valve port 171 by a circular angle. In this way, stress concentration may be avoided, and strength of the protrusion 232 may be increased. When the guiding portion 23 is inserted into the valve port 171, a circular-angle structure may have a better guiding effect.

In some embodiments, after the protrusion 232 extend into the valve port 171, an outer circumferential side of the protrusion 232 may abut against the inner wall of the valve port 171 circumferentially, thereby enhancing a limiting action for the protrusion 232.

In some embodiments, when the third sealing member 233 abuts against an end surface of the valve port 171 towards the connecting portion 22, a depth of the protrusion 232 extending into the valve port 171 may be at least 1 mm, such as 2mm, 3mm, 4mm, or the like. In this way, a depth of the guiding portion 23 inserted into the valve port 171 may be in a proper range, which may not result in insufficient performance of isolating the medium due to too shallow insertion depth.

In some embodiments, an end surface of the valve seat 17 towards the valve core 20 may be provided with an annular protrusion 111 corresponding to the third sealing member 233. When the stop valve 100 is closed, the third sealing member 233 may cooperate with the annular protrusion 111 to seal the valve port 171.

In some embodiments, a shape of a side of the annular protrusion 111 towards the third sealing member 233 may be a smooth circular arc, thereby avoiding damage to the third sealing member 233, and ensuring sealing performance between the annular protrusion 111 and the third sealing member 233.

Alternatively, in other embodiments, the shape of the side of the annular protrusion 111 towards the third sealing member 233 may also be disposed as a shape that can ensure sealing performance such as a rectangle, a triangle, or the like.

When the stop valve 100 is closed, the valve core 20 may move towards the valve port 171, and finally the third sealing member 233 may abut against the annular protrusion 111 to isolate the first opening 11 and a first communicating pipe 13 from inside of the valve body 10. In some embodiments, a material of the third sealing member 233 may include copper, so as to ensure sealing performance between the third sealing member 233 and the valve port 171. In other embodiments, the third sealing member 233 may also be made of a material that can also ensure sealing performance, such as hard plastic.

In addition, the stop valve 100 may further include a spiracle assembly 30, which may be connected to the main body 16. In the present embodiment, the spiracle assembly 30 may be disposed opposite to the second opening 12 as an inflatable inlet or a deflation outlet, and configured to supplement or release the medium for an entire refrigeration system. In other embodiments, an axis of the spiracle assembly 30 may be perpendicular to an axis of the second opening 12, and the spiracle assembly 30 may also be disposed in other positions of the main body 16.

The spiracle assembly 30 may include a connecting body 33, which may be connected to the main body 16 and serve as a channel through which the medium enters the valve body 10.

The spiracle assembly 30 may further include a spiracle core 35, a cover 31, and a fourth sealing member 32. The spiracle core 35 may be disposed in the connecting body 33, so that inside of the main body 16 may be connected to or isolated from inside of the connecting body 33. The cover 31 may be disposed on an outer circumferential side of the connecting body 33, and configured to protect the valve core 35 and prevent external impurities from entering. The fourth sealing member 32 may be located between the cover 31 and the connecting body 33, and cooperate with the cover 31 to seal the connecting body 33.

Specifically, an end of the spiracle core 35 may be provided with an elastic member 34. When the spiracle core 35 is not under external pressure, the spiracle core 35 may remain in a closed state. At this moment, the connecting body 33 remains sealed to isolate the inside of the valve body 10 from outside. When the spiracle core 35 is under pressure, the spiracle core 35 may press the elastic member 34 and move towards a direction proximal to the main body 16, thereby releasing isolation, so that the inside of the main body 16 may be connected to the inside of the connecting body 33, the medium may pass into or flow out from the inside of the valve body 10. The elastic member 34 may be configured to reset the spiracle core 35.

The present invention further provides a refrigeration system, which includes the foregoing stop valve 100. The stop valve 100 may be is mounted in a medium passage of the refrigeration system to control cut-off and circulation of the passage and is configured to supplement the medium to the refrigeration system.

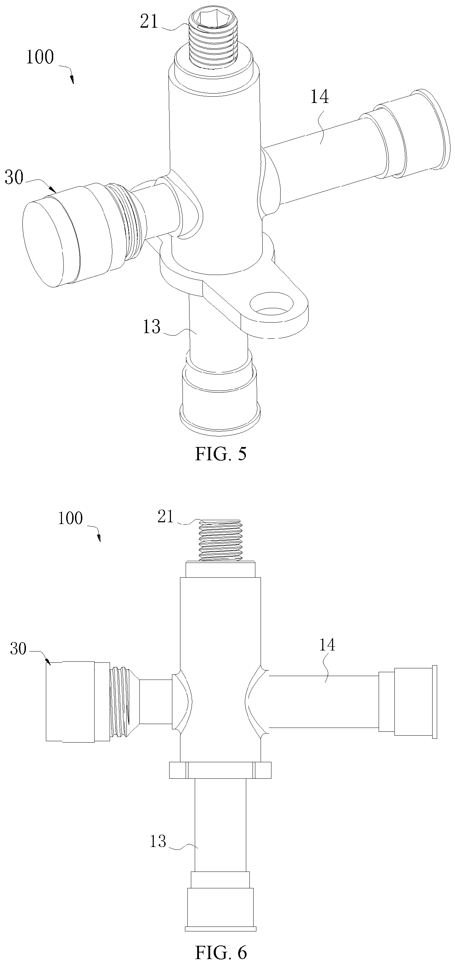

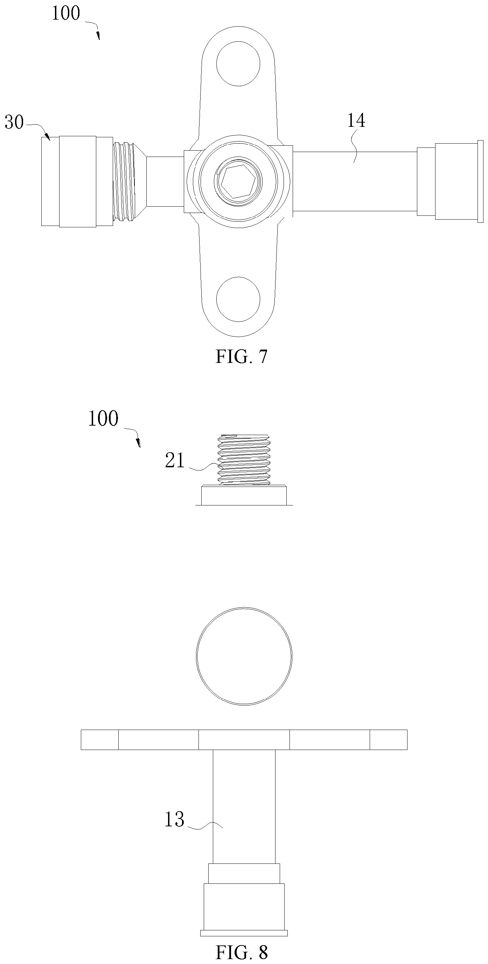

Referring to FIG. 1 and FIG. 5 to FIG. 8. In an operating process of the stop valve 100 in the present embodiment, when the stop valve 100 needs to be closed, the operating portion 21 at the top of the stop valve 100 may be screwed, and the operating portion 21 and the connecting portion 22 may be rotated synchronously by cooperation between the first thread section 211 and the second thread section 151, so that the connecting portion 22 may drive the valve core 20 to move axially relative to the end cover 15, the guiding portion 23 at the bottom of the valve core 20 may be inserted into the valve port 171, the third sealing member 233 may abut against the valve seat 17, and the first connecting pipe 13 may be sealed, thereby implementing cut-off between the first connecting pipe 13 and the second connecting pipe 14.

Compared with the related art, the guiding portion 23 on the valve core 20 in the present invention may be pressed against the third sealing member 233, so that a hard sealing of the valve core 20 may be implemented, and the third sealing member 233 may be avoided to fall off.

The various technical features of the above-described embodiments may be combined arbitrarily, and all possible combinations of the various technical features of the above-described embodiments have not been described for the sake of brevity of description. However, as long as there is no contradiction in the combination of these technical features, they should be considered to be within the scope of this description.

The foregoing embodiments represent only several implementation manners of the present invention, and descriptions thereof are relatively specific and detailed, but may not be construed as a limitation on the scope of the present invention. It should be noted that one skilled in the art may make some modifications and improvements without departing from the concept of the present invention, which are within the protection scope of the present invention. Therefore, the protection scope of the present invention shall be subject to the appended claims.

## Claims

1. A stop valve, **characterized by** comprising a hollow valve body and a valve core,
wherein a valve seat is disposed in the valve body, and a valve port is disposed on the valve seat;
at least a portion of the valve core is disposed inside the valve body and capable of moving along an axis of the valve body to block or open the valve port; and
the valve core comprises a connecting portion and a guiding portion connected with each other, the guiding portion is disposed at an end of the connecting portion proximal to the valve port and capable of extending into the valve port, an end of the connecting portion proximal to the guiding portion is provided with a third sealing member, the third sealing member is capable of abutting against the valve seat, and at least a part of the guiding portion is pressed against the third sealing member.

2. The stop valve of claim 1, wherein a percentage of an area of the guiding portion pressed on the third sealing member is in a range of 15% to 50% of an area of a side surface of the third sealing member towards the valve port.

3. The stop valve of claim 2, wherein the percentage of the area of the guiding portion pressed on the third sealing member is in a range of 30% to 40% of the area of the side surface of the third sealing member towards the valve port.

4. The stop valve of claim 1, wherein the guiding portion and the connecting portion are disposed separately.

5. The stop valve of claim 4, wherein a side of the connecting portion towards the guiding portion is provided with a second groove; and
the guiding portion comprises a first section and a protrusion, the first section is disposed at an end of the protrusion towards the connecting portion, the first section is inserted into the second groove and connected to an inner wall of the second groove, the protrusion is connected to a side of the first section away from the connecting portion, and the protrusion is capable of extending into the valve port.

6. The stop valve of claim 4, wherein a side of the guiding portion towards the connecting portion is provided with a second groove, and an end of the connecting portion is inserted into the second groove and connected to an inner wall of the second groove.

7. The stop valve of claim 5, wherein the side of the connecting portion towards the guiding portion is provided with the second groove and the guiding portion is connected to the inner wall of the second groove by bolt or thread.

8. The stop valve of claim 6, wherein the side of the guiding portion towards the connecting portion is provided with the second groove and the connecting portion is connected to the inner wall of the second groove by bolt or thread.

9. The stop valve of claim 1, wherein when the third sealing member abuts against an end surface of the valve seat towards the connecting portion, a depth of the guiding portion extending into the valve port is at least 1 mm.

10. The stop valve of claim 1, wherein an inner diameter of the valve port is disposed corresponding to an outer diameter of the guiding portion and an outer sidewall of the guiding portion abuts against an inner wall of the valve port.

11. The stop valve of claim 1, wherein a material of the third sealing member comprises copper or plastic.

12. The stop valve of claim 1, wherein a side of the connecting portion towards the guiding portion is provided with a first groove and the third sealing member is disposed in the first groove.
